# EUROPEAN PATENT APPLICATION

(11) **EP 0 934 697 A1**
(43) Date of publication of application: **11.08.1999**
(21) Application number: 98204166.7
(22) Date of filing: 09.12.1998
(51) Int. Cl.: A01K 61/00

(54) **A method for the cultivation, conditioning and storage of shell fish independently of the season and an installation for operating of this method**

(30) Priority: 09.12.1997 NL 1007744
(71) Applicant: Navital S.a.r.l., 1653 Luxembourg (LU); Crustcare B.V.B.A., 1840 Londerzeel (BE)
(72) Inventor: The designation of the inventor has not yet been filed
(74) Representative: Merkelbach, B.

(57) **Abstract**

The invention refers to a new method for the cultivation, conditioning and storage of shell fish, regardless of the (cultivating and/or fishing) season, particularly of oysters, mussels and gastropods, as well as crustaceans such as lobsters and crabs, and certain suitable fish types.

In the new method animal product species are processed within a living environment L. In a first stage (A) animal product species are pre-cleaned and pre-selected, and in second stage (B) are conditioned in a conditioned environment and/or cultivated and/or stored and shipped. In an optional third stage (C) animal product species are conserved , stored and shipped. This enables the production of a microbiologically safe product, which is almost uniform and satisfies to all standards of suitability for consumption.

The invention further refers to a installation (1) for the living environment system L for the application of the new method and also provides for the corresponding technical installation for operating of the new method.

## Description

A method for the cultivation, conditioning and storage of shell fish, regardless of the (cultivating and/or fishing) season, particularly of oysters, mussels and gastropods, as well as crustaceans such as lobsters and crabs, and certain types of suitable fish, hereinafter commonly referred to as 'animal product species'. Thereby the animal species are located in a covered against external influences protected environment.

Further the invention refers to an environmental live system that shows an arrangement wherein the new method can be applied for/and the invention also refers to the technical installation wich applies the new method for installation in the intended environmental living system.

Thus far commonly applied methods of culture of oysters and mussels result in a considerable high drop out percentage of animal product species due to the known fishing method by which the oysters or mussels are unloaded by means of steel nets (so called trawler nets) to the ship's deck or in the cargo space of the ship.

Usually oysters are stored in open tide oyster ponds which are inter connected directly via a lock with the fishing waters. Usually these ponds are not deeper then 1.5 metre and do not only serve for storage but also as a purification station. In the ponds the oysters are highly dependable of not controllable natural factors, such as open air, sunlight and the condition of the fishing waters.

Most oysters are capable to recover themselves within about two weeks from possible damaged shells during fishing via their own calcium syntheses, dependable of the water temperature and the amount of sunlight. Unrecovered shells may soon die, which process may be increased during the transport to the customers.

A well known method is characterized by a number of important factors, which often may affect the quality of oysters and also the efficiency of such processing.

A practical obstruction for the oyster processing during particular in the summer periods is the serious weakening of oysters due to process which is dependable on light intensity and temperature. Storage is hereby an extra problem due to the high temperatures which often occur in the oyster ponds. During the winter the opposite occurs when the heating of the oyster ponds is made necessary due to frost. The extra costs caused hereby are not proportional to the extra results obtained during this period, so that the heating of ponds is economically of no interest. Such conditions may result in these periods to a loss percentage of up to 80%.

Another serious problem that may occur at too high temperatures is the presence of certain populations of enterobacteria, like Vibrio spp (among which Vibrio paraheamolyticus, E. coli, Campylobactor- and Salmonella spp). If pathogenous, these bacteria may cause infections for human, and the transport for consumption is therefore not allowed during these periods.

Fishing with oyster dredge-nets causes on the pollution of mussels by the stirring of sand and silt, wich has to be removed by water. Current methods of watering have the main purpose to unload the oyster cargo on specially prepared locations such as e.g. the Yerseke Bank. Processing by this method is inherent to a number of restrictions. The Yerseke Bank has e.g. repeatedly reported to be contaminated by pathogenous enterobacteria.

Also the possibilities to water on board of a ship are limited so far. Research has revealed that during the season, especially during the winter months, it takes too much time to water oysters and therefore it can not be performed efficiently on board of a ship.

The purpose of the invention is versatile. It is based on the consideration that a method for cultivation which is dependable of a season while removing production interruption factors, like reproduction a contamination processes, may improve the productivity and may contribute to its continuation. The invention also provides in the minimalization of direct human manipulation and also optimizes the maintenance of hygiene.

Above mentioned disadvantages which are inherent to the present cultivation methods are solved and removed respectively by a new method according the invention.

Thereto the new method provides for the cultivation, conditioning and storage of shellfish, regardless of the (cultivating and/or fishing) season, particularly oysters, mussels and gastropods, as well as crustaceans such as lobsters and crabs, and certain types of suitable fish, hereinafter commonly referred to as 'animal product species', in a covered living environment which is protected against external influences and which has specific characteristics, including a preferably lockable interconnection with natural water, with controlled environmental conditions such as aeration, air and water temperature, acidity (pH), luminous intensity, water flow rate, and biological, chemical and physical factors of the water, including the necessary nutrient, mineral and oxygen content, metabolites and suspended particles, which method is performed by the use of a combination of at least processing stages A and B, if necessary supplemented by optional processing stage C:

### A. First processing stage

1. unloading animal product species;
2. pre-cleaning (optional) and rinsing, or changing the water for, the unloaded animal product species (optional);
3. rough separation of animal product species from waste (optional) and pre-selection of animal product species based on quality and size (optional);
4. placing pre-selected animal product species in water-changing containers;
5. subsequently installing (or stacking, if required) the water-changing containing the animal product species in a (closed) conditioned part of the living environmental system;

### B. Second processing stage and storage stage

6. subjecting the animal product species to further water-changing and biological purification and, if required, to disinfection by means of running water;
7. purification and, if required, sterilization of water which has flown over and alongside the animal product species;
8. redirecting purified and, if necessary, sterilized water over and alongside the animal product species in order to create a continuous process of water change and/or disinfection and/or conditioning;

### C. Conservation stage (optional)

9. the animal product species after having been subjected to stage B to a cold shock treatment, which animal product species are microbiologically safe and which are meanwhile almost uniform and suitable for consumption;
10. if required, subjecting (part of) the shell of an animal product species to a heat treatment;
11. deep-freezing or dry-freezing, e.g. with liquid nitrogen, the raw animal product species with part of its shell, e.g. half the shell, or the meat of the animal product species respectively, prior to storage or transport respectively;

The different measures result among others in the end result that
a. for consumption there is obtained a better animal product quality;
b. the productivity is considerably increased, especially during such periods wherein the supply of animal product species is traditionally low;
c. a continuous supply to buyers is possible of both fresh and conserved animal product species;
d. lower loss percentage is achieved during purification, storage and transport and so a higher efficiency is obtained
e. a very strong reduction is achieved of the probability of human contamination by pathogenous bacteria, under compliance with HACCP- and/or ISO-9000 standards.

By the application of this new method big advantages are obtained but also the product animal is subjected to less "stress" during its newly conditioned treatment.

It easily follows that if this new method is suitable for oyster and mussel culture, than it will also be applicable while considering any logical adjustments for the possible cultivation, purification and storage of other shell fish like, gastropods, lobster- and crab species, but even so for other suitable fish species. Certainly these advantages may also be applicable on other animal product species and with any logical adjustments for the cultivation, conditioning, storage and transport thereof. Such adjustments may be easily used by a specialist who knows this new operating method.

The invention further refers to an installation for using the new method. According to the invention the installation comprises a living environment consisting at least of a combination of one or more of the following system parts:
1. a (covered) water basin with an adjacent (covered) unloading area for animal product species;
2. a (mobile) first processing station which is structurally separated from the water basin so that cross infection between freshly unloaded animal product species and microbiologically safe animal product species in a subsequent processing stage is prevented;
3. in connection with the first processing station, a (mobile) storage station for (optionally) roughly cleaned and pre-selected animal product species;
4. first means for the covered water basin such as locks in order to put the animal product species in quarantine, i.e. separated from microbiologically safe animal product species;
5. control equipment which contains instruments to set and maintain conditions in the living environment, in the covered water basin, including air ventilation, air and water temperature, acidity (pH) and other water quality parameters, luminous intensity, and water flow rate over and alongside animal product species;
6. a second processing station which contains second means such as guiding devices, transport devices, stacking devices and supporting devices for installing the water-changing containers which contain animal product species that are subjected to the water (circulation) flow inside the living environment;
7. a water system which contains third means such as water-raising pipes and a pumping system in order to make the water inside the living environment flow over and alongside the animal product species, and instruments for collecting and discharging sediment and shut-off valves for supplying water to, and removing water from, the water basin;
8. a third processing station consisting of a combination of fourth means for the physical and/or chemical and/or biological purification and/or sterilization and/or conditioning of water inside the living environment, such as absorption filters and adsorption filters, foam separators, bio-filters, cooling and/or heating systems, and sterilization systems, e.g. for ultraviolet exposure.

The invention will hereinafter be explained with by means of the drawing of an embodiment.
Fig. 1 shows a block diagram of an installation with several operating stations to carry out the stages according the new method;
Fig. 2 shows a block diagram of some system parts to carry out stage B of the new method;
Fig. 3 shows a perspective and schematical drawing of an installation to carry out stage B of the new method; and
Fig. 4 shows a perspective drawing of a water basin according to the invention to carry out the new method.

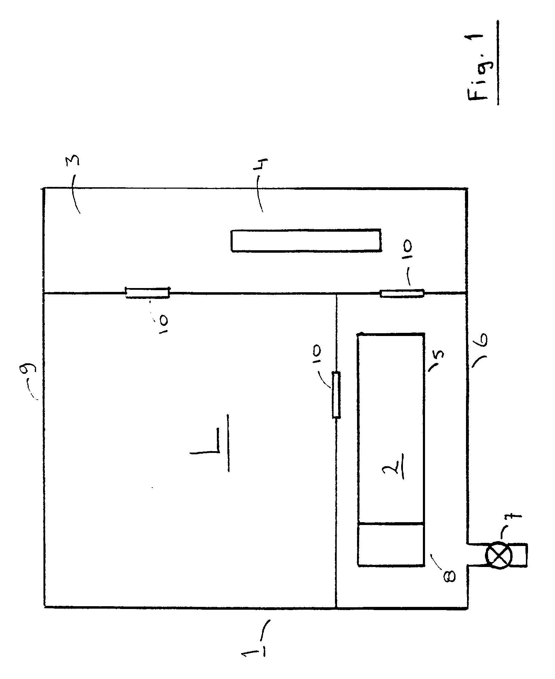

In Fig. 1 is a block diagram of an installation 1 for a living system L comprising a covered water basin 2, a (covered) place for unloading 3, a (mobile) first processing station 4, a (mobile) storage station 5, a second processing station 6, and also supply means for water to a covered water basin 2, like valve 7, a third processing station 8, a fourth processing station 9 and lock connections 10.

After animal product species are unloaded adjacent to the covered water basin 2 on a covered unloading place 3, they are subjected in a first processing station 4 optionally to cleaning and washing. This may be effected by spraying the animal product species clean e.g. by means of a spray lance or by transport through a water basin in which compressed air is injected (a kind of bubble bath). Optionally the animal product species will be roughly separated from waste like loose shells, seaweed, crabs, sea stars and other waste, the so called tara. Optionally animal product species are then preselected amongst others upon quality and size. The optional choices of the aforementioned operations are related to the category of animal product species and/or the quality of the unloaded product specie. So the shell fishes e.g. do not need to be subjected to aforementioned treatments; this also applies e.g. to some loads of oysters and mussels during the high (fishing) season. The animal product species are placed in water-changing containers 11 which now have a storage and a transport function. An endless transport belt may be used for rough cleaning and pre-selection; after the selection the animal product species need not be in touch with e.g. human hands during the purification and storage stages, by which measure cross contamination is prevented and basically all subsequent operations may exclusively be affected in a mechanical way. The use of water changing containers 11 for a storage and/or transport function is beneficial to avoid microbiological contamination. The storage station 5 may have a mobile operation whereby water-changing containers 11 may be mechanically removed.

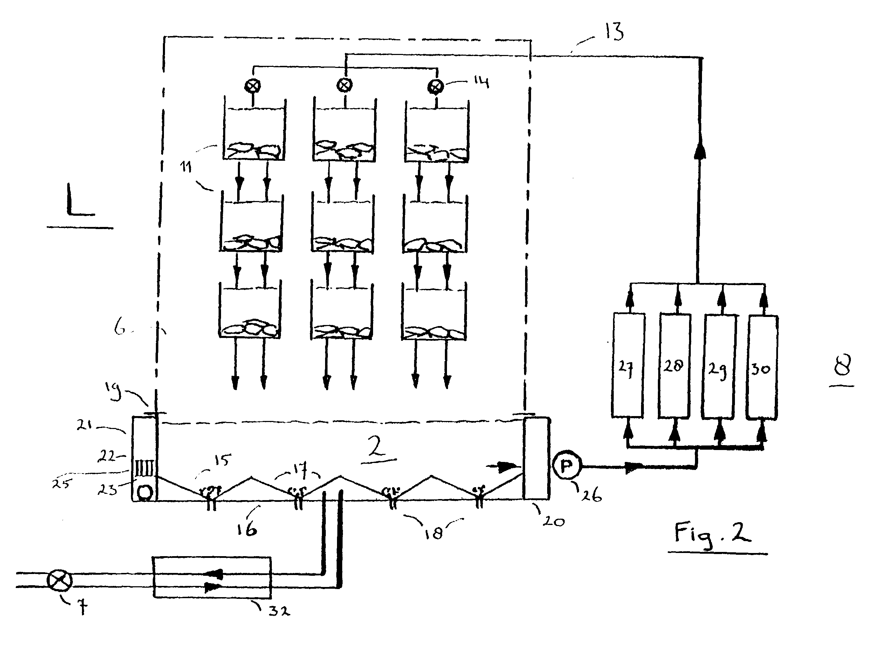

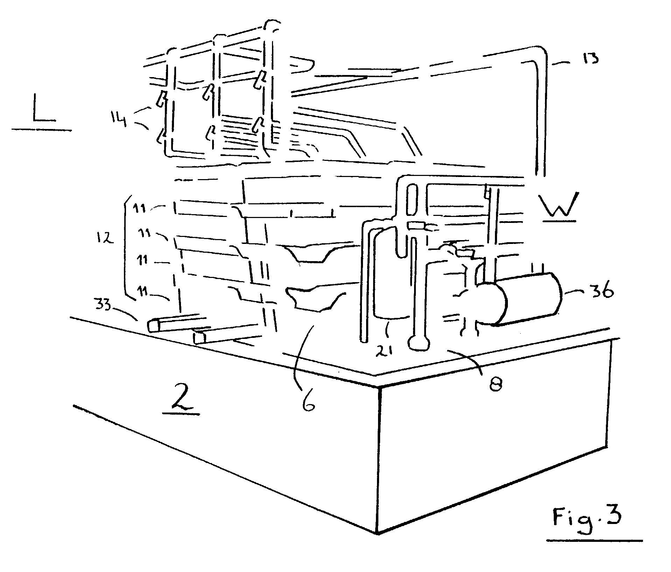

Thereafter these water-changing containers 11 in which schematically shown animal product species are located, are placed via a locked connection, in a second operating station 6. This operation is executed in such a way that any cross contamination will as good as conclusively been restricted between recently unloaded fresh animal product species and in a later operation stage already obtained microbiologically safe animal product species. In the second processing station 6 subsequently a second processing stage takes place, followed by a storage stage. Hereinafter these stages are described by reference to Fig. 2 and Fig. 3 respectively eventually in the third processing station 8 an optional conservation stage takes place.

Fig. 2 schematically shows some system parts to perform stage B of the method. Water-changing containers 11 may be piled up by means of certain means, such as guiding devices, transport devices, stacking devices and supporting devices (not shown) to a so called water-changing battery 12. By the use of a water-changing battery 12 animal product species may be easily placed in or from respectively, the second processing station 6. Moreover inside the second processing station 6 an effective water circulation flow can be generated. The water-changing containers 11 in which the animal product species are located, are preferably placed according to the principle "first in, first out", in or respectively from the second processing station 6. Here from may be deviated when e.g. the growth of several (loads of) animal product species could diverge so much that animal product species later on entered in the living environment are more grown then animal product species which have been earlier entered the living environment. This way of in and out placing respectively or otherwise removing the water-changing containers 11 has the purpose to avoid the chance of cross contamination entirely.

After a water-changing container 11 which contains animal product species, is placed in the water (circulation) flow of the living environment L, water is guided in the living environment L over and alongside respectively animal product species. By means of a water installation W comprising water-raising pipes 13 and shut-off valves 14 it is secured that, animal product species in a water-changing container 11 are always provided with sufficient water and that over complete water can flow downwards out of openings, level-controls and overflow devices at anytime and mainly in a vertical direction (according to the cascade principle), to an water-changing container 11 placed underneath and eventually to the water basin 2. In the water basin 2 the sediment 15 sinks to the bottom 16, like other sand and mud particles and other solid particles. This bottom 16 of the water basin 2 can be provided with means by means, certain means like e.g. sloping down parts 17 and (shutoff) discharge puts 18 whereby sediment 15 can be removed out of the water basin 2. Such a removal of coarse particles is merely one of the many stages of a water purification treatment and possible sterilization of water which has flown over and alongside respectively the animal product species. When the water level in the water basin 2 rises above a preset height, than water flows along e.g. an adjustable overflow 19 to a filtration installation 20 through which all overflowing water from the water basin 2 has to pass. At choice in the water (circulation) flow can be inserted before the filtration installation 20 one or more water purification devices, e.g. a foam separator. The filtration device 20 can exist of one or more filtration units and it can possibly be constructed surrounding the water basin 2. The filtration device 20 may be performed as a biofilter 21 having a fully submerged bacteria containing filter bed 22. To the bottom side of the filter bed 22 there is a synthetic resin support 23 and water is being sucked out and generates a pressure difference over the filter 21 forcing the water to pass through the filter bed 22. This filter bed 22 consists e.g. of a fine granule inert material enabling a good adhesion of bacteria. Ceramic or other materials 24 having a suitable granule structure rest upon one or more metal or synthetic resin sheets 25, provided with perforations 0,2 - 10 mm. The biofilter 21 may e.g. be equipped with a so-called reverse filter rising system, which enables to flush a blocked biofilter bed 22 in back flow thereby not affecting the filter capacity.

In the described embodiment by means of a pump 26 water flows through to a third processing station 8 consisting of a combination of means for physical and/or chemical and/or biological purification and/or sterilization and/or conditioning of water inside the living environment L. These means may exist of absorption and/or adsorption filters 27, e.g. active carbon filters, cooling systems 28, foam separators (so-called foam fractionators) 29 and sterilization systems 30, e.g. a system for radiation by ultra violet light.

After purification and eventual sterilization water is guided over alongside respectively the animal product species via water-raising pipes 13, so in this way a process of continuous water change and/or disinfection and/or conditioning is affected raising the quality of animal product species remarkably.

If necessary the position of several parts of the water-changing system within the living environment L may be changed to the specific requirements of a certain design. The living environment L may so optionally be extended with control equipment which contains means to set and to maintain respectively conditions in the living environment L, in the covered water basin 2, including air ventilation aeration, air and water temperature, acidity (pH) and other parameters of water quality, luminous intensity, and water flow rate over and alongside respectively animal product species. Also the living environment L, particulary the second processing station 6 may be provided with a fully automatic transport installation.

According to the invention the installation may be provided either with a possibility for connection to open water (fishing waters) but it may also a closed water connection, without contact with fishing waters. In that event the water basin 2 in the living environment L is provided with a shut-off valve 7, which is connected to a heat exchanger 32. If water from outside the living environment L is qualitatively and in relation to it's temperature is suited for the cultivation and/or conditioning and/or storage of animal product species, the installation 1 may completely operate on the principle of open circulation. In the event that water quality and water temperature are insufficient, the installation 1 may also fully operate on the principle of a closed circulation. Basically this operation may be entirely a closed circulation of undefined duration (considering e.g. the aspects of a process-technical nature). In this way the advantages of an open system (low costs) are maintained, while inherent disadvantages to an open system (the system sensibility for occurrence external influences) are dissolved by the possibility to let the system operate within a closed circulation. Such logical adjustments will be recognized by an expert.

Fig. 3 shows in a perspective view and schematically an installation 1 having a water basin 2 upon which guiding and supporting devices 33 are resting. On top of these guiding and supporting devices 33 there are provided a number of water-changing units 12. In this embodiment a water-changing battery 12 is consists of four stacked water-changing containers 11. The water-changing containers 11 in which the animal product species are located, are already placed in the water (circulation) flow of the living system L. By means of a water installation W which contains water-raising pipes 13 and shut-off valves 14, water is led over and alongside respectively the animal product species. In the embodiment the mainly vertically flowing water, flows in this way cascade like over more levels over the animal product species in the water-changing containers 11. In this way upstream water, in the water (circulation) flow (further called as "clean water") is never mixed up with downstream water in the water (circulation) flow, which may possibly be contaminated and/or polluted and/or nutrient reduced (further called "dirty water"); in this way there will be no cross contamination.

After the dirty water has flown over the water-changing unit 12 it is collected at the bottom of a water basin 2. This water basin 2 is connected to a so-called foam separator (not shown) which provides for separation of amongst others high molecular waste products. Within the water (circulation) flow there is provided a biofilter, which, by means of vacuum system provides for the passing the overflown water ("dirty water") from the water basin 2, through the biofilter 21. Possibly hereafter the filtered water passes through a UV- sterilization device (not shown), killing the remaining bacteria. This purification and (possible) sterilization is also accomplished by the fact that water is already cleared as glass by the biofilter 21. A small portion of the water in the living environment L passes via an active carbon filter 34 to absorb organic compounds (including cyclic hydrocarbons, residues of pesticides and the like). Under application of water circulation the purified and (possibly) sterilized (and possibly with nutrient enriched) water ("clean water") is re-led over and alongside respectively the animal product species in order to achieve a continuous water-changing and/or disinfecting and/or conditioning process.

Animal product species like obtained under application of the method according this invention until and inclusive stage B, are microbiologically safe for consumption and meanwhile almost uniform (including size and quality). If desired such animal product species may be exposed to a cold shock treatment e.g. to loosen the contraction of the closing muscular of the animal product species. Cold shock treatment may take place in a so called cryogenic plunger. This may be followed if required the exposure of (a part) of the animal product specie to a heat treatment, e.g. by infra red radiation; in such a way it will e.g. be possible to separate the shell from the meat of the animal product specie. A conservation treatment deep freezing still may follow, e.g. with liquid nitrogen, of the raw animal product species with part of its shell, e.g. half the shell, and the meat respectively of the animal product species. Finally still some possibilities are mentioned for wrapping, storage and transportation respectively of both fresh as well as conserved animal product species to the buyers. These treatments for conservation and/or wrapping and/or storage and/or transportation of animal product species may possibly take place in the fourth processing station 9, which is separately provided with respect to the first, second and third processing stations 4, 6 and 8 respectively.

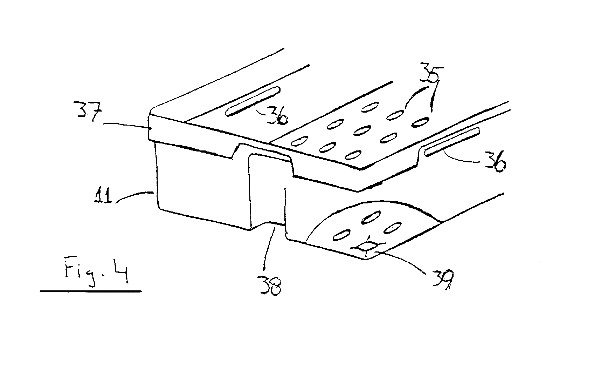

Fig.4 shows a perspective view of a water-changing container 11 for application of the method according the invention. This embodiment is made of synthetic resin material and compromises means 35 (holes) and/or 36 (slots) for the discharge of water and/or contaminations. Further the water-changing container 11 is provided with means 37 to stack more items to form a water-changing battery 12, means 38 to place water-changing unit 12 on supporting devices 33, e.g. synthetic pallets, means (not shown) for the realization of a mainly vertically directed and preferably constant water flow in water-changing container 11 and water-changing units 12 respectively and means 39 for the integration of a drainage overflow system and respectively of separate water-changing containers 11, to constitute a drainage and overflow system respectively of water-changing units 12. The possibility is hereby created to drain (keep dry) a part of the living environment system L.

The new method and installation for application of this new method offer the opportunity for the cultivation, conditioning, storage and transportation of animal product species particularly shell fish regardless of the (cultivating and/or fishing) season. This enables a high quality and also a quantitatively and economically effective processing may take place of raw frozen shell fish meat and e.g. half shell oysters, which are offered for consumption in East Asiatic countries. Living shell fish are conserved more effectively and with less loss of specific nutrient technical characteristics, by means of a production line including e.g. a cryogenic plunger, an infrared tunnel and a deep-freezing unit respectively, while using e.g. liquid nitrogen.

Usage of water-changing containers for application of the method also *outside* the conditioned part of the living environment, but also *outside* the living environment itself, e.g. as transport device or mobile living environment, e.g. during transport of animal product species to buyers, also contributes to a high-qualitatively and also quantitatively economically efficient processing of shell fish.

## Claims

1. A method for the cultivation, conditioning and storage of shellfish, regardless of the (cultivating and/or fishing) season, particularly of oysters, mussels and gastropods, as well as crustaceans such as lobsters and crabs, and certain types of suitable fish, hereinafter commonly referred to as 'animal product species', in a covered living environment which is protected against external influences and which has specific means, including a preferably lockable interconnection with natural water, with controlled environmental conditions such as aeration, air and water temperature, acidity (pH), luminous intensity, water flow rate, and biological, chemical and physical factors of the water, including the necessary nutrient, mineral and oxygen content, metabolites and suspended particles. Which method may is performed by the use of a combination of at least processing stages A and B, if necessary supplemented by optional processing stage C:
A. First processing stage
1. unloading animal product species;
2. pre-cleaning (optional) and rinsing, or changing the water for, the unloaded animal product species (optional);
3. rough separation of animal product species from waste and optional pre-selection of animal product species based on quality and size (optional);
4. placing pre-selected animal product species in water-changing containers;
5. subsequently installing (or stacking, if required) the water-changing containers containing the animal product species in a (closed) conditioned part of the living environment system;
B. Second processing stage and storage stage
6. subjecting the animal product species to further water-changing and biological purification and, if required, to disinfection by means of running water;
7. purification and, if required, sterilization of water which has flown over and alongside the animal product species;
8. redirecting purified and, if necessary, sterilized water over and alongside the animal product species in order to create a continuous process of water change and/or disinfection and/or conditioning;
C. Conservation stage (optional)
9. the animal product species after having been subjected to stage B to a cold shock treatment, which animal product species are microbiologically safe and which are meanwhile almost uniform and suitable for consumption;
10. If required, subjecting (part of) the shell of an animal product species to a heat treatment;
11. Deep-freezing or dry freezing, e.g. with liquid nitrogen, the raw animal product species with part of its shell, e.g. half the shell, or the meat of the animal product species respectively, prior to storage or transport.

2. A method according to claim 1, characterized in that animal product species are basically treated only by machine after selection according to stage A, item 3, during all subsequent operations within the living environment, at least during the second processing stage and storage stage B

3. A method according to claim 1, characterized in that packaging and refrigerated or frozen storage of the animal product species take place after stages A and B, items 1-11

4. A method according to one of the foregoing claims 1-2, characterized in that a conveyor belt is used during stage A, items 2-4

5. A method according to one of the foregoing claims 1-4, characterized in that, during stage A, item 5, the water-changing containers are first stacked in different sections of the conditioned part of the living environment, preferably according to the first-in first-out principle, and that the water-changing containers are installed and removed in such a manner that cross contamination is prevented

6. A method according to one of the foregoing claims 1-5, characterized in that, during stage B, item 6, the animal product species are subjected to a primarily vertical water flow with simultaneous water circulation

7. A method according to one of the foregoing claims 1-6, characterized in that stage B, item 7, also includes:
(a) collecting water;
(b) allowing solid particles to settle down in the water basin;
(c) (periodically) removing sediment;
(d) if required, mixing fresh water with the water to be purified and, if necessary, sterilized in the conditioned part of the living environment;
(e) physical and/or chemical and/or biological purification and/or sterilization of the water present in the living environment, in particular by means of absorption filtration and/or adsorption filtration, foam separation, ultraviolet exposure and/or cooling or heating; and
(f) in required, enriching the living environment water with nutrients suitable for the animal product species

8. A method according to one of the foregoing claims 1-7, characterized in that in the fresh water to be allowed into the living environment from a natural source is first examined with regard to the necessary physical, chemical and biological composition and subsequently subjected to heat exchange

9. A method according to one of the foregoing claims 1-8, characterized in that, during stage B, item 7, the treatment of water, and (bio-)filtration in particular, occurs in a forced manner by generating a pressure difference over the (bio-) filter which results in a stable water flow

10. A method according to one of the foregoing claims 1-9, characterized in that, during stage C, item 9, the animal product species are subjected to cold shock treatment by means of a so-called cryogenic plunger

11. A facility for using the method according to one of the foregoing claims 1-10, containing a living environment (L) which consists at least of a combination of one or several of the following system parts:
1. a (covered) water basin (2) with an adjacent (covered) unloading area (3) for animal product species;
2. a (mobile) first processing station (4) which is structurally separated from the water basin (2) so that cross infection between freshly unloaded animal product species and microbiologically safe animal product species in a subsequent processing stage is prevented;
3. in connection with the first processing station (4), a (mobile) storage station (5) for (optionally) roughly cleaned and pre-selected animal product species;
4. First means for the covered water basin (2) such as locks (10) in order to put the animal product species in quarantine, i.e. separated from microbiologically safe animal product species;
5. control equipment which contains instruments to set and maintain conditions in the living environment, in the covered water basin (2), including air ventilation, air and water temperature, acidity (pH) and other water quality parameters, luminous intensity, and water flow rate over and alongside animal product species;
6. a second processing station (6) which contains several second means such as guiding devices, transport devices, stacking devices and supporting devices (33) for installing the water-changing containers (11) which contain animal product species that are subjected to the water (circulation) flow inside the living environment;
7. a water system (W) which contains third means such as water-raising pipes (13) and a pumping system (26) in order to make the water inside the living environment flow over and alongside the animal product species, and instruments (17, 18) for collecting and discharging sediment (15) and shut-off valves (7) for supplying water to, and removing water from, the water basin (2);
8. a third processing station (8) consisting of a combination of fourth means for the physical and/or chemical and/or biological purification and/or sterilization and/or conditioning of water inside the living environment, such as absorption filters and adsorption filters (27), foam separators (29), bio-filters (20, 21), cooling and/or heating systems (28), and sterilization systems (30), e.g. for ultraviolet exposure.

12. An installation according to claim 11 which contains at least one or several of the following means:
1. a transport system;
2. a heat exchanger (32);
3. water level controllers and overflow devices in order to bring about a primarily vertical water flow over and alongside the animal product species present inside the water-changing containers;
4. equipment for dosing nutrients for animal product species;
5. equipment for dosing the amount of sunlight and/or artificial light;
6. equipment for generating a pressure difference over a (bio-) filter (20, 21) inside the living environment (L) in order to obtain a stable water filtration;
7. monitoring equipment for controlling the settings of vital parameters of the living environment.

13. An installation according to one of the foregoing claims 11-12, furthermore equipped with instruments in which animal product species may be subjected to a process of continuous water change and/or disinfection

14. An installation according to one of the foregoing claims 11-13, characterized in that a fourth processing station (9) is provided in which the animal product species may be subjected to cold shock treatment, and this processing station (9) may also contain instruments for treating, more specifically opening, animal product species, e.g. by means of heat exposure, and instruments for deep-freezing or dry-freezing animal product species and the meat of animal product species

15. A covered water basin (2) designed for using the working method according to one of the foregoing claims 1-10

16. A storage station (5), for roughly cleaned and pre-selected animal product species, designed for using the working method according to one of the foregoing claims 1-10

17. A water system (W) designed for using the method according to one of the foregoing claims 1-10

18. Water-changing containers (11) designed for using the working method according to one of the foregoing claims 1-10, consisting of at least a device which is open at the top and equipped with such means (37) to ensure that they may be stacked on top of one another, and with several outlet openings or slots (35) for drainage at the bottom, and of which the raised side walls are closed all around, with several outlet openings or slots (36) present only above a certain height which bring about a level-controlling overflow of the water-changing container (11), resulting in a vertical water flow inside a water-changing unit (12).

19. A water-changing container (11) according to claim 18 designed for usage as a transport device in one or several stages (A, B, C) of the method according to one of the foregoing claims 1-10

20. A water-changing container (11) according to claim 18 designed for usage as mobile living environment

21. Animal product species obtained by using the method according to one of the foregoing claims 1-10
